# EUROPEAN PATENT APPLICATION

(11) **EP 4 350 053 A1**
(43) Date of publication of application: **10.04.2024**
(21) Application number: 22809319.1
(22) Date of filing: 08.02.2022
(51) Int. Cl.: C25B 11/032, C25B 11/052, C25B 11/056, C25B 11/061, C25B 11/065, C25B 9/00, C25B 9/05, C25B 9/23, C25B 9/65, C25B 1/02

(54) **ELECTROCHEMICAL CELL FOR HYDROGEN PUMPS, AND COMPRESSION APPARATUS**

(30) Priority: 27.05.2021 JP 2021088917
(71) Applicant: Panasonic Intellectual Property Management Co., Ltd., Osaka-shi, Osaka 540-6207 (JP)
(72) Inventor: NAKAUE, Takayuki, Kadoma-shi, Osaka 571-0057 (JP); KAKUWA, Takashi, Kadoma-shi, Osaka 571-0057 (JP); SAKAI, Osamu, Kadoma-shi, Osaka 571-0057 (JP); KANI, Yukimune, Kadoma-shi, Osaka 571-0057 (JP)
(74) Representative: Grünecker Patent- und Rechtsanwälte PartG mbB
(86) International application number: PCT/JP2022/004784
(87) International publication number: WO 2022/249560

(57) **Abstract**

An electrochemical cell for a hydrogen pump includes an electrolyte membrane, an anode catalyst layer disposed on one main surface of the electrolyte membrane, a cathode catalyst layer disposed on the other main surface of the electrolyte membrane, an anode gas diffusion layer disposed on the anode catalyst layer, and a cathode gas diffusion layer disposed on the cathode catalyst layer. When a voltage is applied between the anode catalyst layer and the cathode catalyst layer, the cathode gas diffusion layer is exposed to a hydrogen-containing gas at a pressure higher than that at the anode gas diffusion layer. A thickness of the anode gas diffusion layer is greater than or equal to a thickness of the cathode gas diffusion layer.

## Description

### Technical Field

The present disclosure relates to an electrochemical cell for a hydrogen pump and a compression apparatus.

### Background Art

In recent years, due to environmental issues, such as global warming, and energy issues, such as depletion of petroleum resources, hydrogen has attracted attention as a clean alternative energy source that replaces fossil fuels. Hydrogen is expected as clean energy because hydrogen basically generates only water even when burnt, does not discharge carbon dioxide, which is responsible for global warming, and hardly discharges nitrogen oxides and the like.

In addition, as apparatuses that utilize hydrogen as a fuel at high efficiency, for example, fuel cells are known and are being developed and widely used for power supplies for automobiles and private power generation for household use.

In the coming hydrogen society, it is desired to develop techniques capable of not only producing hydrogen but also storing hydrogen at a high density and transporting or utilizing hydrogen in a small volume and at a low cost. In particular, hydrogen supply infrastructures need to be developed to promote the widespread use of fuel cells serving as distributed energy resources. Furthermore, to stably supply hydrogen, various studies on the production, purification, and high-density storage of high-purity hydrogen have been conducted.

For example, PTL 1 and PTL 2 propose, in compression apparatuses for purifying and compressing hydrogen, a structure in which a stack of a solid polymer electrolyte membrane, electrodes, and separators is sandwiched between end plates and fastened. Citation List

### Patent Literature

PTL 1: Japanese Unexamined Patent Application Publication No. 2006-70322
PTL 2: Japanese Patent No. 6360061

### Summary of Invention

### Technical Problem

An object of the present disclosure is to provide an electrochemical cell for a hydrogen pump and a compression apparatus that are capable of maintaining a hydrogen compression operation at high efficiency compared with those in the related art.

### Solution to Problem

An electrochemical cell for a hydrogen pump according to an aspect of the present disclosure includes an electrolyte membrane; an anode catalyst layer disposed on one main surface of the electrolyte membrane; a cathode catalyst layer disposed on the other main surface of the electrolyte membrane; an anode gas diffusion layer disposed on the anode catalyst layer; and a cathode gas diffusion layer disposed on the cathode catalyst layer, wherein when a voltage is applied between the anode catalyst layer and the cathode catalyst layer, the cathode gas diffusion layer is exposed to a hydrogen-containing gas at a pressure higher than that at the anode gas diffusion layer, and a thickness of the anode gas diffusion layer is greater than or equal to a thickness of the cathode gas diffusion layer.

A compression apparatus according to an aspect of the present disclosure includes the above-described electrochemical cell and a voltage applicator that applies a voltage between the anode catalyst layer and the cathode catalyst layer of the electrochemical cell, wherein the compression apparatus causes, by applying the voltage with the voltage applicator to generate compressed hydrogen, hydrogen in a hydrogen-containing gas supplied to an anode to move to a cathode through the electrolyte membrane and generates compressed hydrogen.

### Advantageous Effects of Invention

The electrochemical cell for a hydrogen pump and the compression apparatus according to the aspects of the present disclosure exhibit the effect of capable of maintaining a hydrogen compression operation at high efficiency compared with those in the related art.

### Brief Description of Drawings

[Fig. 1A] Fig. 1A is a view illustrating an example of an electrochemical hydrogen pump according to a first embodiment.
[Fig. 1B] Fig. 1B is an enlarged view of portion B of the electrochemical hydrogen pump in Fig. 1A.
[Fig. 2A] Fig. 2A is a view illustrating an example of an electrochemical hydrogen pump according to the first embodiment.
[Fig. 2B] Fig. 2B is an enlarged view of portion B of the electrochemical hydrogen pump in Fig. 2A.
[Fig. 3] Fig. 3 is a view illustrating an example of the relation between a thickness of an anode gas diffusion layer and a thickness of a cathode gas diffusion layer in an electrochemical cell according to the first embodiment.
[Fig. 4] Fig. 4 is a graph illustrating an example of the relation between a cathode pressure and an overvoltage in an electrochemical cell having a configuration of the present disclosure and an electrochemical cell having an existing configuration.
[Fig. 5] Fig. 5 is a graph illustrating an example of the relation between a difference between a thickness of an anode gas diffusion layer and a thickness of a cathode gas diffusion layer and an overvoltage in an electrochemical cell according to a second embodiment.

### Description of Embodiments

PTL 1 proposes that a cathode gas diffusion layer is formed by using a titanium fiber sintered body that can follow the deformation of a cathode when high-pressure hydrogen is generated.

PTL 2 proposes that a cathode gas diffusion layer is formed by using steel wool, a foamed metal body containing nickel-chromium, a cloth made of carbon fibers, or the like. PTL 2 further discloses a configuration in which the rigidity of a cathode gas diffusion layer is smaller than the rigidity of an anode gas diffusion layer, and the thickness of the cathode gas diffusion layer is larger than the thickness of the anode gas diffusion layer. This can provide followability of the cathode gas diffusion layer to distortion due to high-pressure hydrogen to thereby suppress an increase in the contact resistance of an electrochemical cell.

In general, an electrolyte membrane has a high proton conductivity under high-temperature and highly humidified conditions, and the hydrogen compression efficiency of the electrochemical cell is improved. For this reason, a hydrogen-containing gas supplied to the anode is humidified. In this case, the smaller the thickness of the anode gas diffusion layer, the larger the pressure loss of the anode because the hydrogen-containing gas is less likely to diffuse in a direction parallel to the main surface of the anode gas diffusion layer. As the pressure loss of the anode increases, the pressure of the hydrogen-containing gas supplied to the anode increases. Consequently, the amount of water vapor in the hydrogen-containing gas decreases in accordance with the Dalton's law, and insufficient humidification of the electrolyte membrane may occur. If drying up of the electrolyte membrane is consequently caused, the hydrogen compression efficiency of the electrochemical cell may decrease.

In view of this, when the thickness of the anode gas diffusion layer is increased, the above problem of drying up is reduced; however, when the anode gas diffusion layer and the cathode gas diffusion layer are designed in accordance with the invention described in PTL 2, the thickness of the cathode gas diffusion layer is further increased, resulting in an increase in the electrical resistance in the thickness direction of the cathode gas diffusion layer.

In view of the above, an electrochemical cell for a hydrogen pump according to a first aspect of the present disclosure includes an electrolyte membrane, an anode catalyst layer disposed on one main surface of the electrolyte membrane, a cathode catalyst layer disposed on the other main surface of the electrolyte membrane, an anode gas diffusion layer disposed on the anode catalyst layer, and a cathode gas diffusion layer disposed on the cathode catalyst layer. When a voltage is applied between the anode catalyst layer and the cathode catalyst layer, the cathode gas diffusion layer is exposed to a hydrogen-containing gas at a pressure higher than that at the anode gas diffusion layer. A thickness of the anode gas diffusion layer is greater than or equal to a thickness of the cathode gas diffusion layer.

According to this configuration, the electrochemical cell for a hydrogen pump according to this aspect can maintain the hydrogen compression operation at high efficiency compared with that in the related art. Specifically, since the electrochemical cell according to this aspect has a thickness of the anode gas diffusion layer greater than or equal to that of the cathode gas diffusion layer, diffusibility of a hydrogen-containing gas in a direction parallel to the main surface of the anode gas diffusion layer is improved compared with the case where the thickness of the anode gas diffusion layer is smaller than the thickness of the cathode gas diffusion layer. Accordingly, in the electrochemical cell according to this aspect, since the pressure loss generated in the anode gas diffusion layer is reduced, an increase in the pressure of the hydrogen-containing gas supplied to the anode is suppressed, and as a result, a proper amount of water vapor in the hydrogen-containing gas for humidifying the electrolyte membrane can be maintained. Thus, the electrochemical cell according to this aspect can suppress a decrease in the hydrogen compression efficiency of the electrochemical cell due to drying up of the electrolyte membrane.

An electrochemical cell according to a second aspect of the present disclosure is based on the electrochemical cell according to the first aspect, in which the anode gas diffusion layer may have a higher modulus of elasticity than the cathode gas diffusion layer.

According to this configuration, since the modulus of elasticity of the anode gas diffusion layer is higher than the modulus of elasticity of the cathode gas diffusion layer, the electrochemical cell according to this aspect is likely to have, in the anode gas diffusion layer, rigidity enough to withstand press by the electrolyte membrane due to the differential pressure generated between the cathode and the anode of the electrochemical cell compared with the case where the modulus of elasticity of the anode gas diffusion layer is lower than or equal to the modulus of elasticity of the cathode gas diffusion layer.

An electrochemical cell according to a third aspect of the present disclosure is based on the electrochemical cell according to the first aspect, in which the anode gas diffusion layer may include a porous metal sheet.

An electrochemical cell according to a fourth aspect of the present disclosure is based on the electrochemical cell according to the first aspect, in which the anode gas diffusion layer may include a porous carbon sheet.

An electrochemical cell according to a fifth aspect of the present disclosure is based on the electrochemical cell according to the fourth aspect, in which the porous carbon sheet may be a carbon powder sintered body.

According to this configuration, in the electrochemical cell according to this aspect, since the anode gas diffusion layer includes a porous carbon sheet formed of a carbon powder sintered body, the anode gas diffusion layer can have desired electrical conductivity, gas diffusibility, and rigidity.

An electrochemical cell according to a sixth aspect of the present disclosure is based on the electrochemical cell according to the fourth aspect, in which the porous carbon sheet may be a carbon fiber sintered body.

According to this configuration, in the electrochemical cell according to this aspect, since the anode gas diffusion layer includes a porous carbon sheet formed of a carbon fiber sintered body, the anode gas diffusion layer can have desired electrical conductivity, gas diffusibility, and rigidity.

An electrochemical cell according to a seventh aspect of the present disclosure is based on the electrochemical cell according to any one of the first aspect to the sixth aspect, in which a difference between the thickness of the anode gas diffusion layer and the thickness of the cathode gas diffusion layer may be less than or equal to 0.1 mm.

If the difference between the thickness of the anode gas diffusion layer and the thickness of the cathode gas diffusion layer is greater than 0.1 mm, an increase in the thickness of the anode gas diffusion layer may cause a degradation of diffusibility of the hydrogen-containing gas in a direction perpendicular to the main surface of the anode gas diffusion layer.

In view of this, the electrochemical cell according to this aspect has a difference between the thickness of the anode gas diffusion layer and the thickness of the cathode gas diffusion layer of less than or equal to 0.1 mm and thus can appropriately maintain diffusibility of the hydrogen-containing gas in the direction perpendicular to the main surface of the anode gas diffusion layer compared with the case where the difference in thickness is greater than 0.1 mm.

A compression apparatus according to an eighth aspect of the present disclosure includes the electrochemical cell according to any one of the first aspect to the seventh aspect, and a voltage applicator that applies a voltage between the anode catalyst layer and the cathode catalyst layer of the electrochemical cell. The compression apparatus causes, by applying the voltage with the voltage applicator to generate compressed hydrogen, hydrogen in a hydrogen-containing gas supplied to an anode to move to a cathode through the electrolyte membrane and generates compressed hydrogen.

The operation and effect of the compression apparatus according to this aspect are the same as the operation and effect of the electrochemical cell according to any one of the first aspect to the seventh aspect, and thus their descriptions will be omitted.

Embodiments of the present disclosure will be described below with reference to the accompanying drawings. The embodiments described below are all examples of the aspects described above. Accordingly, numerical values, shapes, materials, components, arrangement positions and connection forms of the components, and the like described below are merely examples and are not intended to limit the aspects unless otherwise specified in claims. Among the following components, components that are not described in the independent claims, which indicate the highest concepts of the above-described aspects, are described as optional components. The description of components denoted by the same reference sign in the drawings may be omitted. In the drawings, components are schematically illustrated for ease of comprehension, and the shapes, dimensional ratio, etc. of the components may not be accurately illustrated.

In the following embodiments, the configuration and operation of an electrochemical hydrogen pump, which is an example of the compression apparatus according to the above aspect, will be described.

### (First embodiment)

### [Apparatus configuration]

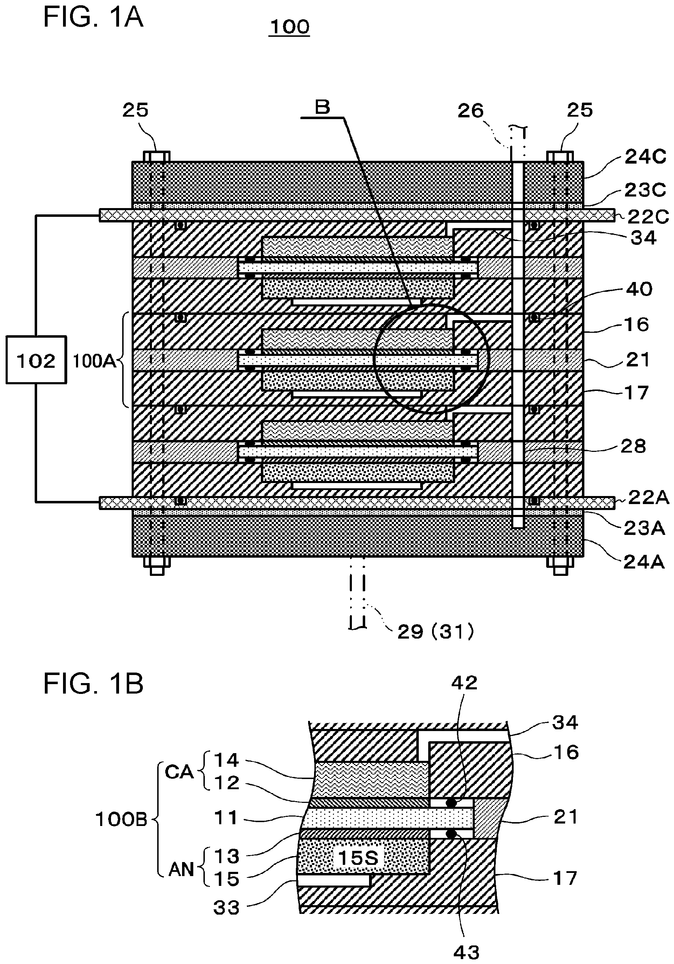

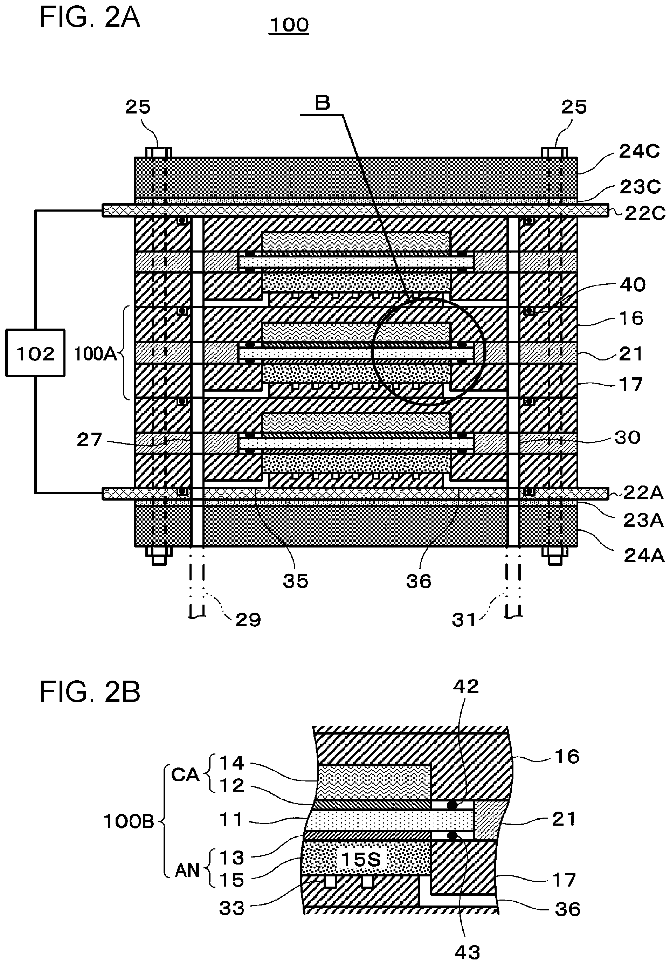

Figs. 1A and 2A are views illustrating an example of an electrochemical hydrogen pump according to a first embodiment. Fig. 1B is an enlarged view of portion B of the electrochemical hydrogen pump in Fig. 1A. Fig. 2B is an enlarged view of portion B of the electrochemical hydrogen pump in Fig. 2A.

Fig. 1A illustrates a vertical section of an electrochemical hydrogen pump 100 including a straight line passing through the center of the electrochemical hydrogen pump 100 and the center of a cathode gas outlet manifold 28 in plan view. Fig. 2A illustrates a vertical section of the electrochemical hydrogen pump 100 including a straight line passing through the center of the electrochemical hydrogen pump 100, the center of an anode gas inlet manifold 27, and the center of an anode gas outlet manifold 30 in plan view.

The electrochemical hydrogen pump 100 includes at least one electrochemical cell 100B. The electrochemical cell 100B includes an electrolyte membrane 11, an anode AN, and a cathode CA. When a voltage is applied between an anode catalyst layer 13 and a cathode catalyst layer 12, the cathode gas diffusion layer 14 is exposed to a hydrogen-containing gas at a pressure higher than that at an anode gas diffusion layer 15.

In a hydrogen pump unit 100A of the electrochemical hydrogen pump 100, the electrolyte membrane 11, the anode catalyst layer 13, the cathode catalyst layer 12, the anode gas diffusion layer 15, the cathode gas diffusion layer 14, an anode separator 17, and a cathode separator 16 are stacked.

In the example illustrated in Figs. 1A and 2A, although three electrochemical cells 100B are stacked in the electrochemical hydrogen pump 100, the number of electrochemical cells 100B is not limited to this. That is, the number of electrochemical cells 100B can be appropriately determined on the basis of the operating conditions, such as the amount of hydrogen to be compressed by the electrochemical hydrogen pump 100.

The anode AN is disposed on one main surface of the electrolyte membrane 11. The anode AN is an electrode including the anode catalyst layer 13 and the anode gas diffusion layer 15. In plan view, an annular sealing member 43 is disposed so as to surround the periphery of the anode catalyst layer 13, so that the anode catalyst layer 13 is appropriately sealed with the sealing member 43.

The cathode CA is disposed on the other main surface of the electrolyte membrane 11. The cathode CA is an electrode including the cathode catalyst layer 12 and the cathode gas diffusion layer 14. In plan view, an annular sealing member 42 is disposed so as to surround the periphery of the cathode catalyst layer 12, so that the cathode catalyst layer 12 is appropriately sealed with the sealing member 42.

Thus, the electrolyte membrane 11 is held between the anode AN and the cathode CA so as to be in contact with the anode catalyst layer 13 and the cathode catalyst layer 12.

The electrolyte membrane 11 may have any configuration as long as the membrane has proton conductivity. Examples of the electrolyte membrane 11 include a sulfonic acid-modified fluorinated polymer electrolyte membrane and a hydrocarbon electrolyte membrane. Specifically, the electrolyte membrane 11 may be composed of, for example, Nafion (registered trademark, manufactured by DuPont) or Aciplex (registered trademark, manufactured by Asahi Kasei Corporation) but is not limited to these.

The anode catalyst layer 13 is disposed on one main surface of the electrolyte membrane 11. The anode catalyst layer 13 contains carbon that can support a catalytic metal (e.g., platinum) in a dispersed state, but is not limited to this.

The cathode catalyst layer 12 is disposed on the other main surface of the electrolyte membrane 11. The cathode catalyst layer 12 contains carbon that can support a catalytic metal (e.g., platinum) in a dispersed state, but is not limited to this.

The method for preparing the catalyst in the cathode catalyst layer 12 and the anode catalyst layer 13 is not particularly limited, and various methods may be employed. Examples of carbon powders include graphite, carbon black, and powders of electrically conductive activated carbon and the like. The method for supporting platinum or another catalytic metal on a carbon carrier is not particularly limited. For example, a method such as powder mixing or liquid-phase mixing may be employed. For example, the latter liquid-phase mixing may be a method of dispersing a carrier, such as carbon, in a colloidal liquid of a catalyst component, and causing the catalyst component to adsorb on the carrier. The supported state of the catalytic metal, such as platinum, on the carbon carrier is not particularly limited. For example, the catalytic metal may be formed into fine particles, and the fine particles may be supported on the carrier in a high dispersion state.

The cathode gas diffusion layer 14 is disposed on the cathode catalyst layer 12. The cathode gas diffusion layer 14 is made of a porous material and has electrical conductivity and gas diffusibility. The cathode gas diffusion layer 14 preferably has elasticity so as to appropriately follow the displacement and deformation of a component caused by the differential pressure between the cathode CA and the anode AN during the operation of the electrochemical hydrogen pump 100. The cathode gas diffusion layer 14 may be formed of, for example, a carbon fiber sintered body or the like, but is not limited to this.

The cathode gas diffusion layer 14 is configured so that the resistance of the surface layer on the cathode separator 16 side is lower than the resistance of the surface layer on the other side, and is preferably disposed so as to be distorted in the thickness direction with respect to the cathode separator 16. As a result, the cathode gas diffusion layer 14 follows the distortion of the cathode separator 16, the electrolyte membrane 11, etc. when high-pressure compressed hydrogen is generated in the cathode CA, and thus, an increase in the contact resistance of the electrochemical cell 100B is suppressed.

Furthermore, the cathode gas diffusion layer 14 may include carbon particles and a resin between carbon fibers in order to improve electrical conductivity and to improve a contact surface.

Examples of the material of carbon particles include acetylene black, Ketjenblack, and natural graphite. Of these, acetylene black is preferably used from the viewpoint of improving electrical conductivity.

Examples of the resin material include polytetrafluoroethylene (PTFE), tetrafluoroethylene-hexafluoropropylene copolymers (FEP), polyvinylidene fluoride (PVDF), tetrafluoroethylene-ethylene copolymers (ETFE), polychlorotrifluoroethylene (PCTFE), and tetrafluoroethylene-perfluoroalkyl vinyl ether copolymers (PFA). Of these, PTFE is preferably used from the viewpoint of ensuring heat resistance, water repellency, and chemical resistance. In this case, the form of the raw material of PTFE may be a dispersion, a powder, or the like.

Examples of the method for making the cathode gas diffusion layer 14 include, but are not limited to, spray coating, a bar coater, transfer, and dip coating.

The anode gas diffusion layer 15 is disposed on the anode catalyst layer 13. The anode gas diffusion layer 15 is made of a porous material and has electrical conductivity and gas diffusibility. The anode gas diffusion layer 15 preferably has rigidity enough to withstand press by the electrolyte membrane 11 due to the above-described differential pressure during the operation of the electrochemical hydrogen pump 100. Specifically, the anode gas diffusion layer 15 has a higher modulus of elasticity than the cathode gas diffusion layer 14. As a result, the anode gas diffusion layer 15 is likely to have rigidity enough to withstand press by the electrolyte membrane 11 due to the differential pressure generated between the cathode CA and the anode AN of the electrochemical cell 100B.

The anode gas diffusion layer 15 includes a porous sheet 15S as illustrated in Figs. 1B and 2B. The detailed configuration of the porous sheet 15S will be described in a first example and a second example.

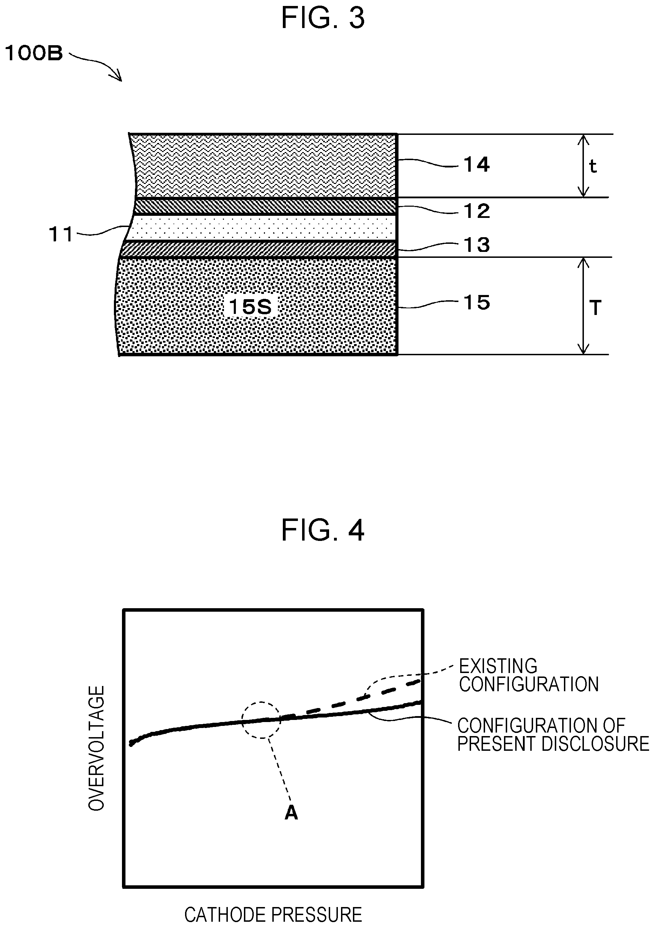

In the electrochemical hydrogen pump 100 according to this embodiment, as illustrated in Fig. 3, a thickness T of the anode gas diffusion layer 15 is greater than or equal to a thickness t of the cathode gas diffusion layer 14. Accordingly, the configuration of the present disclosure (T ≥ t) related to the thicknesses of the anode gas diffusion layer 15 and the cathode gas diffusion layer 14 reduces the pressure loss generated in the anode gas diffusion layer 15 compared with the existing configuration (T < t) related to the thicknesses of the two layers as in PTL 2.

Specifically, for example, the temperature of the electrochemical hydrogen pump 100 and the dew point of a hydrogen-containing gas supplied to the anode AN were each set to about 50°C, and in an example of the configuration of the present disclosure and an example of the existing configuration, a gas pressure of the cathode CA (hereinafter referred to as a cathode pressure) of the electrochemical cell 100B and a flow rate of the hydrogen-containing gas were set to the same conditions. The pressure loss generated in the anode gas diffusion layer 15 was measured in this state, and the following results were obtained. It was confirmed that the configuration of the present disclosure reduced the pressure loss generated in the anode gas diffusion layer 15 compared with the existing configuration.
·Configuration of the present disclosure: 27.16 kPa
·Existing configuration: 27.51 kPa

Next, for an electrochemical cell having the configuration of the present disclosure and an electrochemical cell having the existing configuration, the correlation between the cathode pressure and the overvoltage was measured.

Fig. 4 is a graph illustrating an example of the relation between the cathode pressure and the overvoltage in the electrochemical cell having the configuration of the present disclosure and the electrochemical cell having the existing configuration. The horizontal axis of Fig. 4 represents the cathode pressure of the electrochemical cell, and the vertical axis represents the overvoltage of the electrochemical cell.

As illustrated in Fig. 4, in each of the configuration of the present disclosure and the existing configuration, until the cathode pressure of the electrochemical cell passed through region A, the overvoltage of the electrochemical cell gradually increased as the cathode pressure of the electrochemical cell increased. In a high-pressure side region in which the cathode pressure of the electrochemical cell passes through region A, the increase in the overvoltage of the electrochemical cell 100B having the configuration of the present disclosure slowed down compared with the increase in the overvoltage of the electrochemical cell having the existing configuration. This phenomenon is considered to occur because there is the following difference between the configuration of the present disclosure and the existing configuration in drying up of the electrolyte membrane 11.

The electrochemical cell having the existing configuration has a thickness T of the anode gas diffusion layer 15 smaller than a thickness t of the cathode gas diffusion layer 14; therefore, the pressure loss generated in the anode gas diffusion layer 15 is high compared with the electrochemical cell 100B having the configuration of the present disclosure. Thus, in the electrochemical cell having the existing configuration, the amount of water vapor in the hydrogen-containing gas supplied to the anode AN decreases compared with the electrochemical cell 100B having the configuration of the present disclosure; therefore, water for suppressing drying up of the electrolyte membrane 11 tends to be insufficient. In general, as the cathode pressure of an electrochemical cell increases, the temperature of the electrolyte membrane 11 rises, and as the temperature of the electrolyte membrane 11 rises, a larger amount of water for suppressing drying up of the electrolyte membrane 11 is necessary. Accordingly, as illustrated in Fig. 4, in the high-pressure side region in which the cathode pressure of the electrochemical cell passes through region A, the electrochemical cell having the existing configuration tends to lack humidification for suppressing drying up of the electrolyte membrane 11 compared with the electrochemical cell 100B having the configuration of the present disclosure, and the increase in the overvoltage of the electrochemical cell becomes noticeable.

As illustrated in Figs. 1A and 2A, the anode separator 17 is a component disposed on the anode gas diffusion layer 15 of the anode AN. The cathode separator 16 is a component disposed on the cathode gas diffusion layer 14 of the cathode CA.

A recess is formed at the center of each of the cathode separator 16 and the anode separator 17. The cathode gas diffusion layer 14 and the anode gas diffusion layer 15 are housed in the recesses.

In this manner, the cathode separator 16 and the anode separator 17 sandwich the electrochemical cell 100B to thereby form the hydrogen pump unit 100A.

The main surface of the cathode separator 16 in contact with the cathode gas diffusion layer 14 is a flat surface without a cathode gas flow passage. This enables the contact area between the cathode gas diffusion layer 14 and the cathode separator 16 to be increased, compared with the case where the cathode gas flow passage is formed on the main surface of the cathode separator 16. Thus, the electrochemical hydrogen pump 100 can have a reduced contact resistance between the cathode gas diffusion layer 14 and the cathode separator 16.

On the other hand, in plan view, for example, a serpentine anode gas flow passage 33 including a plurality of U-shaped folded portions and a plurality of linear portions is formed on the main surface of the anode separator 17 in contact with the porous sheet 15S. The linear portions of the anode gas flow passage 33 extend in a direction perpendicular to the plane of Fig. 2A. The anode gas flow passage 33 is an example, and the anode gas flow passage is not limited to this. For example, the anode gas flow passage may be composed of a plurality of linear flow passages.

An annular flat-plate like insulator 21 disposed so as to surround the periphery of the electrochemical cell 100B is sandwiched between the conductive cathode separator 16 and anode separator 17. This prevents a short circuit between the cathode separator 16 and the anode separator 17.

The electrochemical hydrogen pump 100 includes a first end plate and a second end plate at both ends in the stacking direction of the hydrogen pump units 100A, and a fastener 25 for fastening the hydrogen pump units 100A, the first end plate, and the second end plate in the stacking direction.

In the example illustrated in Figs. 1A and 2A, a cathode end plate 24C and an anode end plate 24A correspond to the first end plate and the second end plate, respectively. Specifically, the anode end plate 24A is an end plate disposed on the anode separator 17 located at one end in the stacking direction in which the components of the hydrogen pump unit 100A are stacked. The cathode end plate 24C is an end plate disposed on the cathode separator 16 located at the other end in the stacking direction in which the components of the hydrogen pump unit 100A are stacked.

The fastener 25 may have any configuration as long as the fastener 25 can fasten the hydrogen pump units 100A, the cathode end plate 24C, and the anode end plate 24A in the stacking direction. For example, the fastener 25 may be a bolt and a nut with a coned disc spring.

As illustrated in Fig. 1A, the cathode gas outlet manifold 28 with a cylindrical shape is constituted by a series of through-holes formed in the components of the three hydrogen pump units 100A and in the cathode end plate 24C and a blind hole formed in the anode end plate 24A. The cathode end plate 24C is provided with a cathode gas outlet channel 26. The cathode gas outlet channel 26 may be constituted by a pipe through which a cathode off-gas discharged from the cathode CA flows. The cathode gas outlet channel 26 communicates with the cathode gas outlet manifold 28.

Furthermore, the cathode gas outlet manifold 28 communicates with the cathode CA of each of the hydrogen pump units 100A via a cathode gas passing channel 34. Thus, compressed hydrogen generated at the cathode CA of each of the hydrogen pump units 100A passes through the corresponding cathode gas passing channel 34 and then joins together at the cathode gas outlet manifold 28. The joined compressed hydrogen is introduced into the cathode gas outlet channel 26.

In this manner, the cathodes CA of the hydrogen pump units 100A communicate with each other through the cathode gas passing channels 34 of the hydrogen pump units 100A and the cathode gas outlet manifold 28.

In plan view, an annular sealing member 40, such as an O-ring, is disposed between the cathode separator 16 and the anode separator 17, between the cathode separator 16 and a cathode feed plate 22C, and between the anode separator 17 and an anode feed plate 22A so as to surround the cathode gas outlet manifold 28, so that the cathode gas outlet manifold 28 is appropriately sealed by the sealing members 40.

As illustrated in Fig. 2A, the anode end plate 24A is provided with an anode gas inlet channel 29. The anode gas inlet channel 29 may be constituted by a pipe through which a hydrogen-containing gas to be supplied to the anode AN flows. The anode gas inlet channel 29 communicates with the anode gas inlet manifold 27 with a cylindrical shape. The anode gas inlet manifold 27 is constituted by a series of through-holes formed in the components of the three hydrogen pump units 100A and in the anode end plate 24A.

The anode gas inlet manifold 27 communicates with one end portion of the anode gas flow passage 33 of each of the hydrogen pump units 100A via a first anode gas passing channel 35. Thus, a hydrogen-containing gas supplied to the anode gas inlet manifold 27 through the anode gas inlet channel 29 is distributed to each of the hydrogen pump units 100A through the corresponding first anode gas passing channel 35 of the hydrogen pump unit 100A. While the distributed hydrogen-containing gas passes through the anode gas flow passage 33, the hydrogen-containing gas is supplied to the anode catalyst layer 13 through the anode gas diffusion layer 15.

The anode end plate 24A is provided with an anode gas outlet channel 31. The anode gas outlet channel 31 may be constituted by a pipe through which the hydrogen-containing gas discharged from the anode AN flows. The anode gas outlet channel 31 communicates with the anode gas outlet manifold 30 with a cylindrical shape. The anode gas outlet manifold 30 is constituted by a series of through-holes formed in the components of the three hydrogen pump units 100A and in the anode end plate 24A.

The anode gas outlet manifold 30 communicates with the other end portion of the anode gas flow passage 33 of each of the hydrogen pump units 100A via a second anode gas passing channel 36. Thus, hydrogen-containing gases passing through the anode gas flow passages 33 of the hydrogen pump units 100A are supplied to the anode gas outlet manifold 30 through the second anode gas passing channels 36 and join together in the anode gas outlet manifold 30. The joined hydrogen-containing gas is introduced into the anode gas outlet channel 31.

In plan view, an annular sealing member 40, such as an O-ring, is disposed between the cathode separator 16 and the anode separator 17, between the cathode separator 16 and the cathode feed plate 22C, and between the anode separator 17 and the anode feed plate 22A so as to surround the anode gas inlet manifold 27 and the anode gas outlet manifold 30, so that the anode gas inlet manifold 27 and the anode gas outlet manifold 30 are appropriately sealed by the sealing members 40.

As illustrated in Figs. 1A and 2A, the electrochemical hydrogen pump 100 includes a voltage applicator 102. The voltage applicator 102 is a device that applies a voltage between the anode catalyst layer 13 and the cathode catalyst layer 12. Specifically, a high potential of the voltage applicator 102 is applied to the anode catalyst layer 13, and a low potential of the voltage applicator 102 is applied to the cathode catalyst layer 12. The voltage applicator 102 may have any configuration as long as a voltage can be applied between the anode catalyst layer 13 and the cathode catalyst layer 12. For example, the voltage applicator 102 may be a device that regulates the voltage applied between the anode catalyst layer 13 and the cathode catalyst layer 12. In such a case, the voltage applicator 102 includes a DC/DC converter when connected to a direct-current power supply, such as a battery, a solar cell, or a fuel cell, or includes an AC/DC converter when connected to an alternating-current power supply, such as a commercial power supply.

The voltage applicator 102 may be, for example, an electric power-type power supply in which the voltage applied between the anode catalyst layer 13 and the cathode catalyst layer 12 and the electric current flowing through the electrochemical cell 100B are adjusted such that a predetermined electric power is supplied to the hydrogen pump unit 100A.

In the example illustrated in Figs. 1A and 2A, a low-potential-side terminal of the voltage applicator 102 is connected to the cathode feed plate 22C, and a high-potential-side terminal of the voltage applicator 102 is connected to the anode feed plate 22A. The cathode feed plate 22C is electrically connected to the cathode separator 16 located at the other end in the stacking direction and disposed to face the cathode end plate 24C with a cathode insulating plate 23C interposed therebetween. The anode feed plate 22A is electrically connected to the anode separator 17 located at one end in the stacking direction and disposed to face the anode end plate 24A with an anode insulating plate 23A interposed therebetween.

In this manner, the voltage applicator 102 applies the above voltage to move hydrogen in the hydrogen-containing gas supplied to the anode AN to the cathode CA through the electrolyte membrane 11, and thus the electrochemical hydrogen pump 100 according to this embodiment can generate compressed hydrogen.

Although not illustrated in the drawings, components and devices necessary for the hydrogen compression operation of the electrochemical hydrogen pump 100 according to this embodiment are provided as appropriate.

For example, a temperature detector that detects a temperature of the electrochemical hydrogen pump 100, and a pressure detector that detects a pressure of hydrogen compressed in the cathode CA of the electrochemical hydrogen pump 100 are provided. Furthermore, the anode gas inlet channel 29, the anode gas outlet channel 31, and the cathode gas outlet channel 26 are provided with, for example, a valve for opening and closing the channel at an appropriate position.

The configuration of the electrochemical hydrogen pump 100 described above is an example and is not limited to this example. For example, the electrochemical hydrogen pump 100 may have a dead-end structure in which neither the anode gas outlet manifold 30 nor the anode gas outlet channel 31 is provided and hydrogen (H₂) in a hydrogen-containing gas supplied to the anode AN through the anode gas inlet manifold 27 is compressed in the whole amount in the cathode CA.

### [Operation]

An example of the operation of the electrochemical hydrogen pump 100 will be described below with reference to the drawings. The following operation may be performed by, for example, an arithmetic circuit of a controller (not illustrated) reading a control program from a memory circuit of the controller. However, the following operation is not necessarily performed with the controller. An operator may perform part of the operation. In the following example, a case where the operation is controlled by such a controller will be described.

First, a low-pressure high-humidity hydrogen-containing gas is supplied to the anode AN of the electrochemical hydrogen pump 100, and a voltage of the voltage applicator 102 is applied to the electrochemical hydrogen pump 100. Consequently, a hydrogen molecule dissociates into protons and electrons in the anode catalyst layer 13 of the anode AN (formula (1)). The protons are conducted through the inside of the electrolyte membrane 11 to the cathode catalyst layer 12. The electrons are moved to the cathode catalyst layer 12 through the voltage applicator 102.

A hydrogen molecule is then reproduced in the cathode catalyst layer 12 (formula (2)). It is known that when the protons are conducted through the electrolyte membrane 11, a predetermined amount of water serving as electroosmosis water moves from the anode AN to the cathode CA together with the protons.

At this time, for example, when compressed hydrogen generated in the cathode CA of the electrochemical hydrogen pump 100 is supplied to a hydrogen storage unit (not illustrated) through the cathode gas outlet channel 26, the pressure loss in the cathode gas outlet channel 26 can be increased using a back-pressure valve, a regulating valve (not illustrated), or the like provided in the cathode gas outlet channel 26 to generate compressed hydrogen (H₂) in the cathode CA. Herein, "increasing the pressure loss in the cathode gas outlet channel 26" corresponds to "decreasing the degree of opening of the back-pressure valve or the regulating valve provided in the cathode gas outlet channel 26.

Anode:

H₂ (low pressure) → 2H⁺ + 2e⁻ . . . (1)

Cathode:

2H⁺ + 2e⁻ → H₂ (high pressure) . . . (2)

In this manner, a hydrogen compression operation is performed in which hydrogen in the hydrogen-containing gas supplied to the anode AN is moved to the cathode CA through the electrolyte membrane 11 by applying the voltage between the anode catalyst layer 13 and the cathode catalyst layer 12 of the electrochemical hydrogen pump 100 to generate compressed hydrogen.

Next, the compressed hydrogen generated in the cathode CA of the electrochemical hydrogen pump 100 is discharged from the cathode CA to the outside of the electrochemical hydrogen pump 100 through the cathode gas outlet channel 26. For example, after moisture, impurities, and the like are removed, the compressed hydrogen flowing through the cathode gas outlet channel 26 may be supplied to a hydrogen storage unit, which is an example of a hydrogen consumer, and temporarily stored in the hydrogen storage unit. The compressed hydrogen stored in the hydrogen storage unit may be supplied to a fuel cell, which is an example of the hydrogen consumer, at any time as needed.

Note that the compressed hydrogen generated in the cathode CA may be directly supplied to a fuel cell, without passing through the hydrogen storage unit. In the hydrogen compression operation, for example, before compressed hydrogen is supplied to the hydrogen storage unit, the pressure of the compressed hydrogen in the cathode CA is increased to a predetermined supply pressure, and the compressed hydrogen is then supplied to the hydrogen storage unit. The predetermined supply pressure is, for example, 40 MPa or 80 MPa.

As described above, the electrochemical cell 100B and the electrochemical hydrogen pump 100 (hereinafter, abbreviated as the electrochemical cell 100B etc.) according to this embodiment can maintain the hydrogen compression operation at high efficiency compared with those in the related art. Specifically, since the electrochemical cell 100B etc. according to this embodiment have a thickness T of the anode gas diffusion layer 15 greater than or equal to a thickness t of the cathode gas diffusion layer 14, diffusibility of a hydrogen-containing gas in a direction parallel to the main surface of the anode gas diffusion layer 15 is improved compared with the case where the thickness T of the anode gas diffusion layer is smaller than the thickness t of the cathode gas diffusion layer. Accordingly, in the electrochemical cell 100B etc. according to this embodiment, since the pressure loss generated in the anode gas diffusion layer 15 is reduced, an increase in the pressure of the hydrogen-containing gas supplied to the anode AN is suppressed, and as a result, a proper amount of water vapor in the hydrogen-containing gas for humidifying the electrolyte membrane 11 can be maintained. Thus, the electrochemical cell 100B etc. according to this embodiment can suppress a decrease in the hydrogen compression efficiency of the electrochemical cell 100B etc. due to drying up of the electrolyte membrane 11.

### (First example)

An electrochemical cell 100B etc. of this example are the same as the electrochemical cell 100B etc. of the first embodiment except that the porous sheet 15S is a porous metal sheet.

The anode gas diffusion layer 15 includes a porous metal sheet. Examples of the porous metal sheet that can be used include, but are not limited to, metal powder sintered bodies and metal fiber sintered bodies. The metal material may be titanium but is not limited to this. For example, besides titanium, metal materials such as chromium, nickel, tungsten, tantalum, iron, and manganese may also be used. In addition, for example, an alloy steel (e.g., stainless steel) which is an alloy of two or more of these metals, TiN, which is a nitride, and TiC, which is a carbide, may also be used.

Examples of the method for producing a porous metal sheet include, but are not limited to, a production method including adding a foaming agent to a molten metal, and a method including compression-molding a metal powder or metal fibers, and sintering the resulting molded body.

As described above, in the electrochemical cell 100B etc. of this example, since the anode gas diffusion layer 15 includes a porous metal sheet formed of a metal powder sintered body or the like, the anode gas diffusion layer 15 can have desired electrical conductivity, gas diffusibility, and rigidity.

The electrochemical cell 100B etc. of this example may be the same as the electrochemical cell 100B etc. of the first embodiment except for the feature described above.

### (Second example)

An electrochemical cell 100B etc. of this example are the same as the electrochemical cell 100B etc. of the first embodiment except that the porous sheet 15S is a porous carbon sheet.

The anode gas diffusion layer 15 includes a porous carbon sheet. Examples of the porous carbon sheet that can be used include, but are not limited to, carbon powder sintered bodies and carbon fiber sintered bodies.

In the case where a carbon powder sintered body is used as the porous carbon sheet, examples of the material of carbon particles include acetylene black, Ketjenblack, and natural graphite. Of these, acetylene black is preferably used from the viewpoint of improving electrical conductivity.

In the case where a carbon fiber sintered body is used as the porous carbon sheet, carbon particles and a resin may be disposed between carbon fibers in order to improve electrical conductivity and to improve a contact surface.

Examples of the material of carbon particles include acetylene black, Ketjenblack, and natural graphite as in the above case. Of these, acetylene black is preferably used from the viewpoint of improving electrical conductivity.

Examples of the resin material include polytetrafluoroethylene (PTFE), tetrafluoroethylene-hexafluoropropylene copolymers (FEP), polyvinylidene fluoride (PVDF), tetrafluoroethylene-ethylene copolymers (ETFE), polychlorotrifluoroethylene (PCTFE), and tetrafluoroethylene-perfluoroalkyl vinyl ether copolymers (PFA). Of these, PTFE is preferably used from the viewpoint of ensuring heat resistance, water repellency, and chemical resistance. In this case, the form of the raw material of PTFE may be a dispersion, a powder, or the like.

Examples of the method for producing a porous carbon sheet include, but are not limited to, spray coating, a bar coater, transfer, and dip coating.

As described above, in the electrochemical cell 100B etc. of this example, since the anode gas diffusion layer 15 includes a porous carbon sheet formed of a carbon powder sintered body, a carbon fiber sintered body, or the like, the anode gas diffusion layer 15 can have desired electrical conductivity, gas diffusibility, and rigidity.

The electrochemical cell 100B etc. of this example may be the same as the electrochemical cell 100B etc. of the first embodiment except for the feature described above.

### (Second embodiment)

An electrochemical cell 100B etc. of this embodiment are the same as the electrochemical cell 100B etc. of the first embodiment except for the following point related to the thicknesses of the anode gas diffusion layer 15 and the cathode gas diffusion layer 14.

In the electrochemical cell 100B etc. of this embodiment, a difference (T - t) between a thickness T of the anode gas diffusion layer 15 and a thickness t of the cathode gas diffusion layer 14 is less than or equal to 0.1 mm.

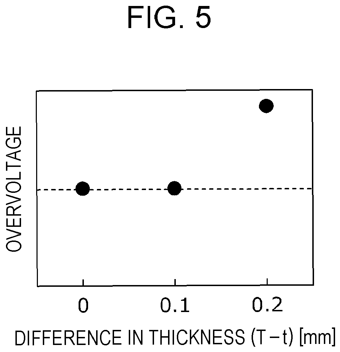

Fig. 5 is a graph illustrating an example of the relation between the difference between the thickness of the anode gas diffusion layer and the thickness of the cathode gas diffusion layer and an overvoltage in the electrochemical cell according to the second embodiment. In Fig. 5, the horizontal axis represents the difference (T - t) between the thickness T of the anode gas diffusion layer 15 and the thickness t of the cathode gas diffusion layer 14 when the thickness t of the cathode gas diffusion layer is fixed, and the vertical axis represents the overvoltage of the electrochemical cell 100B.

As illustrated in Fig. 5, when the difference (T - t) was 0 mm and 0.1 mm, an increase in the overvoltage of the electrochemical cell 100B was not observed, whereas when the difference (T - t) was 0.2 mm, the overvoltage of the electrochemical cell 100B increased. This increase in the overvoltage is considered to be a phenomenon due to the degradation of diffusibility of a hydrogen-containing gas in a direction perpendicular to the main surface of the anode gas diffusion layer 15.

Thus, when the difference (T - t) between the thickness T of the anode gas diffusion layer 15 and the thickness t of the cathode gas diffusion layer 14 is greater than 0.1 mm, an increase in the thickness T of the anode gas diffusion layer 15 may cause a degradation of diffusibility of the hydrogen-containing gas in the direction perpendicular to the main surface of the anode gas diffusion layer 15.

In view of this, the electrochemical cell 100B etc. of this embodiment have a difference (T - t) between the thickness T of the anode gas diffusion layer 15 and the thickness t of the cathode gas diffusion layer 14 of less than or equal to 0.1 mm and thus can appropriately maintain diffusibility of the hydrogen-containing gas in the direction perpendicular to the main surface of the anode gas diffusion layer compared with the case where the difference (T - t) in thickness is greater than 0.1 mm.

The electrochemical cell 100B etc. of this embodiment may be the same as the electrochemical cells 100B etc. of any of the first embodiment, the first example of the first embodiment, and the second example of the first embodiment except for the feature described above.

The first embodiment, the first example of the first embodiment, the second example of the first embodiment, and the second embodiment may be combined with each other as long as they do not exclude each other.

From the foregoing description, various modifications and other embodiments of the present disclosure will be apparent to those skilled in the art. Therefore, the foregoing description is to be construed as illustrative only and is provided for the purpose of teaching those skilled in the art the best mode for carrying out the present disclosure. The details of the structure and/or function of the present disclosure may be substantially changed without departing from the spirit of the present disclosure.

### Industrial Applicability

The present disclosure can be applied to an electrochemical cell for a hydrogen pump and a compression apparatus that can maintain a hydrogen compression operation at high efficiency compared with those in the related art.

### Reference Signs List

11: electrolyte membrane
12: cathode catalyst layer
13: anode catalyst layer
14: cathode gas diffusion layer
15: anode gas diffusion layer
15S: porous sheet
16: cathode separator
17: anode separator
21: insulator
22A: anode feed plate
22C: cathode feed plate
23A: anode insulating plate
23C: cathode insulating plate
24A: anode end plate
24C: cathode end plate
25: fastener
26: cathode gas outlet channel
27: anode gas inlet manifold
28: cathode gas outlet manifold
29: anode gas inlet channel
30: anode gas outlet manifold
31: anode gas outlet channel
33: anode gas flow passage
34: cathode gas passing channel
35: first anode gas passing channel
36: second anode gas passing channel
40: sealing member
42: sealing member
43: sealing member
100: electrochemical hydrogen pump
100A: hydrogen pump unit
100B: electrochemical cell
102: voltage applicator
AN: anode
CA: cathode
T: thickness
t: thickness

## Claims

1. An electrochemical cell for a hydrogen pump, the electrochemical cell comprising:
an electrolyte membrane;
an anode catalyst layer disposed on one main surface of the electrolyte membrane;
a cathode catalyst layer disposed on the other main surface of the electrolyte membrane;
an anode gas diffusion layer disposed on the anode catalyst layer; and
a cathode gas diffusion layer disposed on the cathode catalyst layer,
wherein when a voltage is applied between the anode catalyst layer and the cathode catalyst layer, the cathode gas diffusion layer is exposed to a hydrogen-containing gas at a pressure higher than that at the anode gas diffusion layer, and a thickness of the anode gas diffusion layer is greater than or equal to a thickness of the cathode gas diffusion layer.

2. The electrochemical cell according to claim 1, wherein the anode gas diffusion layer has a higher modulus of elasticity than the cathode gas diffusion layer.

3. The electrochemical cell according to claim 1, wherein the anode gas diffusion layer includes a porous metal sheet.

4. The electrochemical cell according to claim 1, wherein the anode gas diffusion layer includes a porous carbon sheet.

5. The electrochemical cell according to claim 4, wherein the porous carbon sheet is a carbon powder sintered body.

6. The electrochemical cell according to claim 4, wherein the porous carbon sheet is a carbon fiber sintered body.

7. The electrochemical cell according to any one of claims 1 to 6, wherein a difference between the thickness of the anode gas diffusion layer and the thickness of the cathode gas diffusion layer is less than or equal to 0.1 mm.

8. A compression apparatus comprising:
the electrochemical cell according to any one of claims 1 to 7; and
a voltage applicator that applies a voltage between the anode catalyst layer and the cathode catalyst layer of the electrochemical cell, wherein the compression apparatus causes, by applying the voltage with the voltage applicator to generate compressed hydrogen, hydrogen in a hydrogen-containing gas supplied to an anode to move to a cathode through the electrolyte membrane and generates compressed hydrogen.
